# EUROPÄISCHE PATENTSCHRIFT

(11) **EP 0 905 872 B1**
(45) Veröffentlichungstag und Bekanntmachung des Hinweises auf die Patenterteilung: **15.05.2002**
(21) Anmeldenummer: 98810692.8
(22) Anmeldetag: 20.07.1998
(51) Int. Cl.: H02M 7/10, H01F 38/16

(54) **Steuerbare Hochspannungs-Gleichstromversorgung sowie deren Anwendung**
Regulated high voltage DC power supply and its application
Alimentation commandable de courant continu à haute tension et son emploi

(30) Priorität: 29.09.1997 CH 227697
(43) Veröffentlichungstag der Anmeldung: 31.03.1999
(73) Patentinhaber: THOMCAST AG, 5300 Turgi (CH)
(72) Erfinder: Alex, Jürgen, 79777 Untermettingen (DE)
(74) Vertreter: Isler & Pedrazzini AG

(56) Entgegenhaltungen:
- EP-A- 0 563 543
- US-A- 3 568 035
- US-A- 3 708 740
- US-A- 5 023 768
- DATABASE WPI Section EI, Week 8312, Derwent Publications Ltd., London, GB; Class U24, AN 83-E0254K, XP002066838 & SU 928 569 A (REPIN A M)
- PATENT ABSTRACTS OF JAPAN vol. 017, no. 065 (E-1317), 9. Februar 1993 & JP 04 271280 A (SHIMADZU CORP), 28. September 1992

## Beschreibung

### TECHNISCHES GEBIET

Die vorliegende Erfindung bezieht sich auf das Gebiet der Leistungselektronik. Sie betrifft eine steuerbare Hochspannungs-Gleichstromversorgung, umfassend eine Mehrzahl von Modulen, welche Module als schaltbare Gleichspannungsquellen ausgebildet sind, die ausgangsseitig zur Aufsummierung der Ausgangsspannungen in Serie geschaltet sind und eingangsseitig zur Versorgung mit einer Wechselspannung jeweils über einen Netztransformator an ein Wechselspannungsnetz angeschlossen sind.

Eine derartige Hochspannungs-Gleichstromversorgung ist z.B. aus der EP-B1-0 134 505 bekannt.

### STAND DER TECHNIK

Auf dem Gebiet der Hochleistungs-Rundfunksender mit Amplitudenmodulation und Ausgangsleistungen im Bereich von mehreren 100 kW bis über 1 MW sind seit langem mit Leistungshalbleitern bestückte Modulatoren im Einsatz, die nach dem Prinzip der Puls-Step-Modulation (PSM) die notwendige (modulierte) Anodenspannung für die Endröhre des Senders bereitstellen. Der grundsätzliche Aufbau derartiger PSM-Modulatoren ist beispielsweise aus den Druckschriften EP-B1-0 066 904 oder US-A-4,403,197 bekannt. Die PSM-Modulatoren sind aufgebaut aus einer Mehrzahl gleichartiger, schaltbarer Gleichspannungsquellen (Module), die ausgangsseitig zur Aufsummierung der Ausgangs-Gleichspannungen in Serie geschaltet sind und eingangsseitig über einen oder mehrere Netztransformatoren mit einer Mehrzahl von Sekundärwicklungen an ein Wechselspannungsnetz angeschlossen sind. Zum Ein- und Ausschalten der einzelnen Module ist in einer der Ausgangsleitungen jeweils ein gesteuerter Leistungshalbleiterschalter angeordnet. Die Aenderung der Ausgangsspannung des PSM-Modulators erfolgt durch entsprechendes Zu- oder Abschalten von einzelnen Modulen. Zur Ueberbrückung abgeschalteter Module in der Serieschaltung sind üblicherweise Freilaufdioden vorgesehen, die in der Serieschaltung eine Diodenkaskade bilden. Die einzelnen Gleichspannungsquellen (Module) haben eine Ausgangs-Gleichspannung von mehreren 100 V (z.B. 600 V). Durch Serieschaltung von einigen 10 (z.B. 40-50) Modulen lassen sich so maximale Ausgangsspannungen von mehreren 10 kV (bei Sendern z.B. 28 kV) erzeugen.

Es ist nun in der eingangs genannten Druckschrift sowie in der EP-A-0 563 543 bereits vorgeschlagen worden, derartige PSM-Modulatoren als steuerbare und schnell abschaltbare Hochspannungs-Gleichstromversorgungen für andere Zwecke, insbesondere für Plasmaeinrichtungen wie z.B. einen Neutralteilchen-Injektor, einzusetzen. Benötigt werden dabei Ausgangsspannungen von um die 100 kV (z.B. 85 kV) bei Strömen von einigen 10 A. Bei den im praktischen Einsatz befindlichen Versorgungen dieser Art werden die Sekundärwicklungen des Netztransformators dadurch isoliert, dass jede Sekundärwicklung durch eine separate Hochspannungsdurchführung am Transformator nach aussen geführt ist. Soll die maximale Ausgangsspannung der Versorgung auf mehrere 100 kV (350 kV bei 30 A und Pulslängen von mehr als 100 s) erhöht werden, wie dies für eine geplante Negativ-Ionen-Neutralteilchen-Injektion notwendig ist, steigt die Anzahl der verwendeten Module drastisch. Gleichzeitig erhöht sich auch die erforderliche Isolationsspannung für die Durchführungen. Der Netztransformator wird dadurch im Aufbau sehr gross und aufwendig. Darüber hinaus ist zu berücksichtigen, dass in den Streukapazitäten eines derartigen Netztransformators im betrieb eine grosse Ladung gespeichert ist, die sich im Kurzschlussfall in einem Lichtbogen entlädt und nur schwer begrenzt und beherrscht werden kann.

Aus der US-A-3,708,740 ist eine Hochspannungs-Gleichstromversorgung bekannt, deren prinzipieller Aufbau am besten in der Fig. 4 der Druckschrift verdeutlicht ist. Die Versorgung umfasst eine Vielzahl von gleichartigen Modulen 4a,..,41. Die Module 4a,..,41 sind in einem Stapel übereinander angeordnet, wobei benachbarte Module jeweils durch eine gemeinsame metallische Tragplatte 6 voneinander getrennt sind. Die Module erzeugen jeweils mittels Gleichrichterschaltungen 33, 34, 35 aus einer dreiphasigen Wechselspannung eine Gleichspannung. Die Gleichspannungen der Module werden ausgangsseitig aufsummiert. Die Versorgung der einzelnen Module mit der eingangsseitigen dreiphasigen Wechselspannung erfolgt über eine Anordnung von U-förmig gebogenen Stäben 11,..,15, die durch alle Module gemeinsam hindurchlaufen und magnetisch mit entsprechenden Sekundärwicklungen 30, 31, 32 in den einzelnen Modulen verkoppelt sind. Die Stäbe 11,..,15 sind ihrerseits über einen dreiphasigen Netztransformator 63 an das Netz angeschlossen. Obgleich hier zwei Transformatoren hintereinander angeordnet sind bleibt die Problematik der Hochspannungsisolation auf der Modulseite unverändert.

### DARSTELLUNG DER ERFINDUNG

Es ist daher Aufgabe der Erfindung, eine steuerbare Hochspannungs-Gleichstromversorgung für maximale Ausgangsspannungen von mehr als 100 kV, insbesondere mehreren 100 kV zu schaffen, die nach dem Prinzip des PSM-Modulators arbeitet und sich hinsichtlich der notwendigen Isolation der Anlage durch einen vereinfachten und kostengünstigen Aufbau auszeichnet.

Die Aufgabe wird bei einer Hochspannungs-Gleichstromversorgung der eingangs genannten Art dadurch gelöst, dass die Module gruppenweise zu voneinander isoliert aufgebauten Moduleinheiten zusammengefasst sind, dass die Module einer Moduleinheit jeweils durch wenigstens einen in der Moduleinheit angeordneten Netztransformator mit Wechselspannung versorgt werden, und dass zwischen dem wenigstens einen Netztransformator jeder Moduleinheit und dem Wechselspannungsnetz wenigstens ein Isolationstransformator angeordnet ist. Durch diese Art der Anordnung wird die erforderliche Isolation des Gesamtsystems in mehreren Stufen erreicht. Die Moduleinheiten selber können dann in einer ersten Stufe in bewährter Weise so aufgebaut werden, dass sie Ausgangsspannungen von z.B. 40-60 kV haben und intern eine entsprechende Isolationsspannung aufweisen. In einer zweiten Stufe werden die Moduleinheiten voneinander isoliert auf einem höheren Isolationsniveau angeordnet und durch einen oder mehrere zwischengeschaltete Isolationstransformatoren aus dem Netz versorgt. Durch die Zusammenfassung der Modulgruppen in den Moduleinheiten reduziert sich dabei die Anzahl der im Isolationstransformator benötigten Sekundärwicklungen und damit der konstruktive Aufwand erheblich. Für die Netztransformatoren in den Moduleinheiten können wegen der verminderten Isolationsanforderungen vergleichsweise einfache und preiswerte Ausführungen eingesetzt werden.

Gemäss der Erfindung wird die Hochspannungs-Gleichstromversorgung als steuerbare Versorgung für einen Negativ-Ionen-Neutralteilchen-Injektor angewendet.

Eine erste bevorzugte Ausführungsform der Versorgung nach der Erfindung zeichnet sich dadurch aus, dass für alle Moduleinheiten ein gemeinsamer Isolationstransformator verwendet wird, der mit einer Primärwicklung an das Wechselspannungsnetz angeschlossen ist, und eine Mehrzahl von Sekundärwicklungen zum Anschluss der Netztransformatoren der Moduleinheiten aufweist. Obwohl grundsätzlich auch mehrere Isolationstransformatoren eingesetzt werden können, die jeweils eine andere Untergruppe der Moduleinheiten versorgen, führt die Verwendung nur eines Isolationstransformators zu einem Minimum an Aufwand und Platzbedarf.

Der Aufwand in den einzelnen Moduleinheiten ist besonders gering, wenn gemäss eines zweiten bevorzugten Ausführungsbeispiels die Netztransformatoren der Moduleinheiten als luftisolierte oder mit Kunstharz vergossene Transformatoren ausgeführt sind.

Grundsätzlich können die Moduleinheiten in einer Ebene nebeneinander und voneinander und vom Boden isoliert aufgestellt werden. Bedingt durch die Serieschaltung ist der Isolationsaufwand der unteren Moduleinheit relativ zum Boden gering, während der Isolationsaufwand für die auf dem höchsten Potential arbeitende Moduleinheit erheblich ist. Die Isolation von in der Serieschaltung benachbarten Moduleinheiten gegeneinander bleibt dagegen für alle Moduleinheiten gleich Um bei der Isolation der Moduleinheiten eine Vergleichmässigung der Isolation zu erreichen, können die Moduleinheiten entsprechend ihrem Platz in der Serieschaltung in einem Stapel übereinander angeordnet werden. Die Isolation zwischen den Moduleinheiten kann dann für alle Moduleinheiten gleich ausgelegt werden. Nachteilig ist dabei jedoch der hohe turmartige Aufbau, der zu ungewöhnlichen Aussenabmessungen der Anlage und verstärkter mechanischer Instabilität führt. Gemäss einer weiteren bevorzugten Ausführungsform der Erfindung sind daher die Moduleinheiten in zwei Ebenen übereinander angeordnet, wobei in der ersten unteren Ebene eine erste Anzahl von Moduleinheiten nebeneinander und jeweils durch Isolatorstützen vom Boden isoliert aufgestellt sind, und in der zweiten, oberen Ebene auf jeder der Moduleinheiten der ersten Ebene jeweils eine weitere Moduleinheit angeordnet und durch Isolatorstützen von der darunterstehenden Moduleinheit isoliert ist.

Die Isolationsanforderungen innerhalb Moduleinheiten werden dadurch vorteilhaft herabgesetzt, dass gemäss einer anderen bevorzugten Ausführungsform die Moduleinheiten jeweils in einem Gehäuse untergebracht sind, dass innerhalb jeder Moduleinheit die Module in zwei im wesentlichen gleich grosse Gruppen aufgeteilt sind, dass in der ausgangsseitigen Serieschaltung der Module zwischen den beiden Gruppen ein Mittelabgriff vorgesehen ist, und dass das Gehäuse über eine zum Mittelabgriff führende Verbindungsleitung auf das Potential des Mittelabgriffs gelegt ist. Hierdurch wird die Isolationsspannung innerhalb der Moduleinheit im bezug auf das Gehäuse auf die halbe maximale Ausgangsspannung reduziert. Eine bevorzugte Weiterbildung dieser Ausführungsform zeichnet sich dadurch aus, dass innerhalb jeder Moduleinheit jeder der Modulgruppen ein Netztransformator mit einem Transformatorkern sowie einer Primärwicklung und einer der Anzahl der zu versorgenden Module entsprechenden Zahl von Sekundärwicklungen zugeordnet ist, dass die Primärwicklungen und die Kerne der Netztransformatoren jeweils mit dem Mittelabgriff verbunden sind, dass die Netztransformatoren durch eine 3-phasige Anschlussleitung an das Netz angeschlossen sind, und dass eine Phase der Anschlussleitungen bzw. der Sternpunkt mit dem Mittelabgriff verbunden ist.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden.

Es zeigen
- Fig. 1: das vereinfachte Schaltschema eines bevorzugten Ausführungsbeispiels einer Hochspannungs-Gleichstromversorgung nach der Erfindung;
- Fig. 2: den schematisierten internen Schaltungsaufbau einer Moduleinheit der Versorgung nach Fig. 1;
- Fig. 3: ein Schaltungsbeispiel für ein einzelnes Modul der Moduleinheit nach Fig. 2;
- Fig. 4: dem beispielhaften mechanischen Aufbau einer Moduleinheit nach Fig. 2 mit zwei Netztransformatoren und 60 Modulen in der Seitenansicht;
- Fig. 5: den Aufbau aus Fig. 4 in der Draufsicht von oben;
- Fig. 6: die beispielhafte isolierte Anordnung von 8 Moduleinheiten in zwei Ebenen einer Hochspannungs-Gleichstromversorgung nach Fig. 1; und
- Fig. 7: in der Draufsicht von oben die gesamte Versorgung mit den gemäss Fig. 6 angeordneten Moduleinheiten und einem Isolationstransformator.

### WEGE ZUR AUSFÜHRUNG DER ERFINDUNG

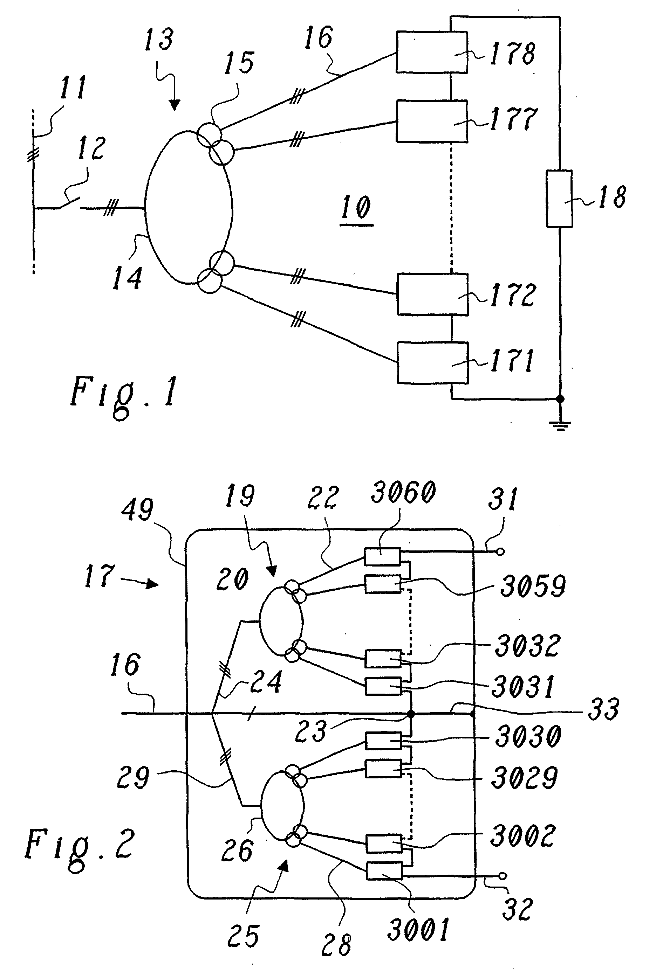

In Fig. 1 ist das vereinfachte Schaltschema eines bevorzugten Ausführungsbeispiels einer steuerbaren Hochspannungs-Gleichstromversorgung nach der Erfindung wiedergegeben. Die Hochspannungs-Gleichstromversorgung 10 umfasst eine Mehrzahl von (im Beispiel 8) ausgangsseitig in Serie geschalteten Moduleinheiten 171 bis 178, von denen der Einfachheit halber nur die beiden untersten (171, 172) und die beiden obersten (177, 178) dargestellt sind. Die Moduleinheiten 171 bis 178 geben an ihren Ausgängen durch Ansteuerung stufenweise veränderbare Gleichspannungen ab, die durch die Serieschaltung aufsummiert werden und zur Versorgung einer Last 18 zur Verfügung stehen. Die maximalen Ausgangsspannungen der Moduleinheiten 171,..,178 liegen dabei vorzugsweise im Bereich von 40 bis 60 kV und betragen insbesondere 43,75 kV, wenn mit 8 Moduleinheiten eine Ausgangsspannung der Versorgung von insgesamt 350 kV erzielt werden soll.

Die Moduleinheiten 171,..,178, deren innerer Aufbau im Zusammenhang mit Fig. 2 weiter unten erläutert wird, enthalten jeweils Netztransformatoren, welche die für die Erzeugung der Ausgangsgleichspannung notwendige Wechselspannung bereitstellen. Wären diese internen Netztransformatoren primärseitig direkt ans Netz angeschlossen, müssten sie für die volle Isolationsspannung gegenüber der Erde ausgelegt sein, was zu einem erheblichen Aufwand innerhalb der Moduleinheiten 171,..,178 führen würden. Die Isolation erfolgt daher in zwei Stufen. Die erste Stufe übernehmen die Netztransformatoren (19, 25 in Fig. 2) innerhalb der Moduleinheiten. Die Isolationsspannung liegt hier im Bereich der Ausgangsspannung der einzelnen Moduleinheiten. Die zweite Stufe der Isolation wird durch einen (galvanisch trennenden) Isolationstransformator 13 verwirklicht, der in Fig. 1 mit seiner Primärwicklung 14 und seinen Sekundärwicklungen 15 nur symbolisch durch eine Ellipse bzw. durch Kreise dargestellt ist. Der Isolationstransformator 13 ist mit seiner Primärwicklung 14 über einen Netzschalter 12 an ein (3-phasiges) Wechselspannungsnetz 11 angeschlossen. Die Sekundärwicklungen 15 versorgen über (3-phasige) Anschlussleitungen 16 die Netztransformatoren in den einzelnen Moduleinheiten 171,..,178 mit der notwendigen Wechselspannung. Es versteht sich dabei von selbst, dass anstelle des einen Isolationstransformators 13 auch mehrere Isolationstransformatoren vorgesehen werden können, die verschiedene Untergruppen der Moduleinheiten 171,..,178 versorgen.

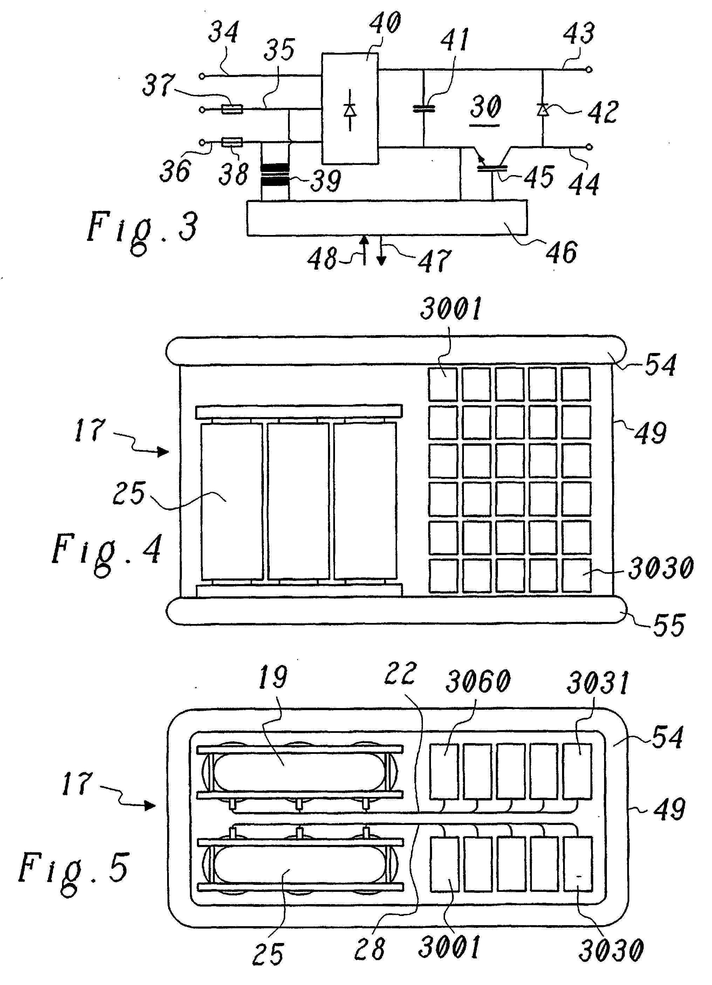

Die einzelnen Moduleinheiten 171,..,178 haben vorzugsweise den in Fig. 2 wiedergegebenen internen Aufbau. Die einzelne Moduleinheit 17 enthält in einem Gehäuse 49 bzw. Rahmen in einer ausgangsseitigen Serieschaltung eine Mehrzahl von einzelnen Modulen 3001 bis 3060, von denen der Einfachheit halber nur die beiden unteren (3001, 3002), die vier mittleren (3029,..,3032) und die beiden oberen (3059, 3060) wiedergegeben sind. Die einzelnen Module 3001 bis 3060 sind gemäss Fig. 3 als schaltbare Gleichspannungsquellen ausgelegt. Sie geben (mit einem handelsüblichen IGBT als Leistungshalbleiterschalter) beispielsweise jeweils eine minimale Ausgangsgleichspannung von 750 V ab. Um eine maximale Ausgangsspannung pro Moduleinheit von 43,75 kV zu erreichen, müssen in der Einheit wenigstens 59 Module in Serie geschaltet werden. Aus Gründen der Redundanz werden jedoch vorzugsweise 60 Module 3001 bis 3060 verwendet, so dass bei Ausfall eines Moduls ein anderes an seine Stelle treten kann. Die in der Serieschaltung aufsummierten Einzelspannungen der Module 3001,..,3060 stehen als Ausgangsspannung der Moduleinheit 17 an zwei Ausgangsleitungen 31, 32 an.

Die Module 3001,..,3060 sind in zwei gleiche Gruppen (Module 3001,..,3030 und Module 3031,..,3060) aufgeteilt. Jeder Gruppe ist ein eigener Netztransformator 19 bzw. 25 zugeordnet. Die Netztransformatoren 19 bzw. 25 haben eine Primärwicklung 20 bzw. 26 und eine der Anzahl der angeschlossenen Module entsprechende Anzahl von Sekundärwicklungen 21 bzw. 28 (im erläuterten Beispiel sind dies 30 Sekundärwicklungen). Die Netztransformatoren 19, 25 sind mit ihren Primärwicklungen 20, 26 über Anschlussleitungen 24, 29 an die gemeinsame (3-phasige) Anschlussleitung 16 der Moduleinheit 17 angeschlossen. Die Sekundärwicklungen 21, 27 sind mit den einzelnen Modulen 3001,..,3060 verbunden.

Die Aufteilung in zwei Gruppen erlaubt es, die Isolationsspannung der Module gegenüber dem Gehäuse 49 herabzusetzen. Dazu ist zwischen den Gruppen ein Mittelabgriff 23 gebildet, der auf den Potential der halben Ausgangsspannung der Moduleinheit 17 liegt. Das Gehäuse 49 ist über eine zum Mittelabgriff 23 führende Verbindungsleitung 33 auf das Potential des Mittelabgriffs 23 gelegt. Damit wird die notwendige Isolationsspannung der einzelnen Module gegenüber dem Gehäuse auf die Hälfte der maximalen Ausgangsspannung der Moduleinheit 17 reduziert. Desgleichen sind die Primärwicklungen 20, 26 und die Kerne der Netztransformatoren 19, 25 jeweils mit dem Mittelabgriff 23 verbunden. Dadurch werden die Anforderungen an die Isolation der Netztransformatoren 19, 25 entsprechend herabgesetzt. Weiterhin ist auch eine Phase der Anschlussleitungen 24, 29 oder - wenn eine Sternschaltung verwendet wird - der Sternpunkt mit dem Mittelabgriff 23 verbunden. Hierdurch wird die Netzspannung gegenüber Erde auf Spannung am Gehäuse 49 fixiert. Als Spannung auf der Primärseite der Netztransformatoren 19, 25 werden vorzugsweise 1000 V verwendet, so dass die Netztransformatoren zur Vereinfachung mit einer herkömmlichen Niederspannungs-Primärwicklung ausgerüstet werden können. Durch die 2-stufige Isolation des Systems und den erläuterten Aufbau der Moduleinheiten ist es möglich, anstelle von aufwendigen ölisolierten einfachere luftisolierte oder mit Kunstharz vergossene Netztransformatoren zu verwenden.

Die einzelnen Module 3001,..,3060 haben vorzugsweise den in Fig. 3 dargestellten Aufbau. Die an den Eingangsleitungen 34, 35 und 36 des exemplarischen Moduls 30 anliegende Wechselspannung wird in einem herkömmlichen 3-phasigen Gleichrichter 40 gleichgerichtet, mittels eines nachfolgenden Filterkondensators 41 geglättet und über zwei Ausgangsleitungen 43, 44 als Ausgangsgleichspannung des Moduls zur Verfügung gestellt. In einer der Ausgangsleitungen (44) ist ein Leistungshalbleiterschalter 45 in Form eines IGBT angeordnet, der von einer Ansteuereinheit 46 angesteuert wird und das Modul 30 wahlweise an- oder abschaltet. Zwischen den Ausgangsleitungen 43, 44 ist hinter dem Leistungshalbleiterschalter 45 eine Freilaufdiode 42 angeordnet. Aufgrund der Leistungsdaten des Moduls 30 ist es möglich für den Leistungshalbleiterschalter 45 beispielsweise einen handelsüblichen 1700 V/75 A IGBT einzusetzen. Auch die anderen Elemente des Moduls 30 wie z.B. die Sicherungen 37, 38 oder der Filterkondensator 41 und der Gleichrichter können kostengünstig aus dem handelsüblichen Angebot ausgewählt werden. Wegen der geringen Verlustleistung des Moduls 30 ist es ausreichend, zur Wärmeabfuhr eine forcierte Luftkühlung mit einem Ventilator zu verwenden. Die Ansteuereinheit 46 wird vorzugsweise über einen Hilfstransformator 39 aus der Netzseite des Moduls 30 versorgt. Der Signalaustausch mit einer zentralen Steuerung des Gesamtsystems erfolgt aus Isolationsgründen vorzugsweise über faseroptische Signalverbindungen 47, 48 (in Fig. 3 symbolisch durch Pfeile dargestellt), die in einer bidirektionalen Faserverbindung zusammengefasst sein können.

Der beispielhafte mechanische Aufbau einer Moduleinheit 17 ist in Fig. 4 in der Seitenansicht und in Fig. 5 in der Draufsicht von oben wiedergegeben. Innerhalb des Gehäuses 49 bzw. Rahmens, die Schutzringen 54, 55 gegen eine Koronaentladung versehen sind, sind die zwei Gruppen der Module 3001,..,3060 in zwei Stapeln parallel zueinander angeordnet. Jedem Modulstapel ist einer der Netztransformatoren 19 bzw. 25 zugeordnet. Die Verbindungsleitungen 22, 28 von den Netztransformatoren 19, 25 zu den Modulgruppen 3001,..,3030 bzw. 3031,..,3060 sind in der Mitte der Moduleinheit 17 geführt. Eine Moduleinheit 17 kann dabei mit Aussenabmessungen realisiert werden, die eine Höhe von 1200 mm, eine Länge von 3100 mm und eine Breite von 1600 mm aufweisen.

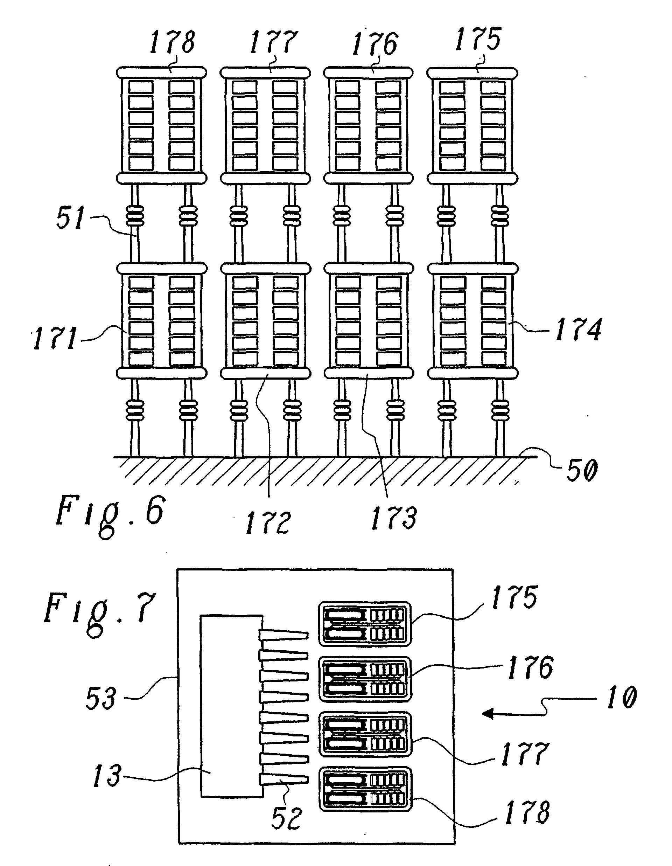

Das Gesamtsystem mit den (im Beispiel 8) Moduleinheiten wird gemäss Fig. 6 vorzugsweise so aufgebaut, dass die eine Hälfte der Moduleinheiten (171,..,174) in einer ersten Ebene isoliert vom Boden 50 aufgestellt wird, wobei jede einzelne Moduleinheit für sich genommen auf mehreren Isolatorstützen 51 steht. Auf jeder der Moduleinheiten 171,..,174 der ersten Ebene steht in einer zweiten Ebene - wiederum auf mehreren Isolatorstützen 51 - jeweils eine Moduleinheit 175,..,178 aus der zweiten Hälfte der Moduleinheiten. Die Moduleinheiten 171,..,174 der unteren Ebene bilden dabei die unteren Moduleinheiten in der Serieschaltung der Fig. 1. Die Moduleinheiten 175,..,178 der oberen Ebene bilden entsprechend die oberen Moduleinheiten der Serieschaltung. Durch den Aufbau in zwei Ebenen wird die erforderliche Isolationsspannung für die Moduleinheiten auf die Hälfte der gesamten Ausgangsspannung reduziert. Eine weitere Reduzierung liesse sich erreichen, wenn mehr als zwei Ebenen verwendet würden. Jedoch würde dies bei einer Höhe der einzelnen Moduleinheit von 2 m zu einer zu grossen Gesamthöhe und einer zu grossen mechanischen Belastung führen.

Die auf den Isolatorstützen 51 in zwei Ebenen aufgestellten Moduleinheiten 171,..,178 werden schliesslich gemäss Fig. 7 mit dem Isolationstransformator 13 in einem Gehäuse 53 (mit einer Grundfläche von ca. 10m x 10m) zu der kompletten Hochspannungs-Gleichstromversorgung 10 zusammengefasst. Der Abstand der einzelnen Moduleinheiten 171,..,178 zum Gehäuse 53 muss dabei nach Massgabe der Betriebsspannung so gewählt werden, dass sich eine zur Isolierung ausreichende Luftstrecke ergibt. Durch den 2-stufigen Isolationsaufbau sind am Isolationstransformator 13 nur wenige Hochspannungsdurchführungen 52 notwendig.

### BEZEICHNUNGSLISTE

- 10: Hochspannungs-Gleichstromversorgung (steuerbar)
- 11: Wechselspannungsnetz (3-phasig)
- 12: Netzschalter
- 13: Isolationstransformator
- 14: Primärwicklung
- 15: Sekundärwicklung
- 16: Anschlussleitung
- 17,171,..,178: Moduleinheit
- 18: Last
- 19,25: Netztransformator (Moduleinheit)
- 20,26: Primärwicklung
- 21,27: Sekundärwicklung
- 22,28: Verbindungsleitung
- 23: Mittelabgriff
- 24,29: Anschlussleitung
- 30: Modul
- 3001,..,3060: Modul
- 31,32: Ausgangsleitung (Moduleinheit)
- 33: Verbindungsleitung
- 34,35,36: Eingangsleitung
- 37,38: Sicherung
- 39: Hilfstransformator
- 40: Gleichrichter (3-phasig)
- 41: Filterkondensator
- 42: Freilaufdiode
- 43,44: Ausgangsleitung (Modul)
- 45: Leistungshalbleiterschalter (IGBT)
- 46: Ansteuereinheit
- 47,48: Signalverbindung (faseroptisch)
- 49: Gehäuse (Moduleinheit)
- 50: Boden
- 51: Isolatorstütze
- 52: Hochspannungsdurchführung
- 53: Gehäuse (Hochspannungs-Gleichstromquelle)
- 54,55: Schutzring (gegen Koronaentladung)

## Patentansprüche

1. Steuerbare Hochspannungs-Gleichstromversorgung (10), umfassend eine Mehrzahl von Modulen (30; 3001,..,3060), welche Module (30; 3001,..,3060) als schaltbare Gleichspannungsquellen ausgebildet sind, die ausgangsseitig zur Aufsummierung der Ausgangsspannungen in Serie geschaltet sind und eingangsseitig zur Versorgung mit einer Wechselspannung jeweils über einen Netztransformator (19, 25) an ein Wechselspannungsnetz (11) angeschlossen sind, **dadurch gekennzeichnet, dass** die Module (30; 3001,..,3060) gruppenweise zu voneinander isoliert aufgebauten Moduleinheiten (17; 171,..,178) zusammengefasst sind, dass die Module einer Moduleinheit jeweils durch wenigstens einen vollständig in der Moduleinheit angeordneten eigenständigen Netztransformator (19, 25) mit Wechselspannung versorgt werden, und dass zwischen dem wenigstens einen Netztransformator (19, 25) jeder Moduleinheit (17; 171,..,178) und dem Wechselspannungsnetz (11) wenigstens ein Isolationstransformator (13) angeordnet ist.

2. Hochspannungs-Gleichstromversorgung nach Anspruch 1, **dadurch gekennzeichnet, dass** für alle Moduleinheiten (17; 171,..,178) ein gemeinsamer Isolationstransformator (13) verwendet wird, der mit einer Primärwicklung (14) an das Wechselspannungsnetz (11) angeschlossen ist, und eine Mehrzahl von Sekundärwicklungen (15) zum Anschluss der Netztransformatoren (19, 25) der Moduleinheiten (17; 171,..,178) aufweist.

3. Hochspannungs-Gleichstromversorgung nach einem der Ansprüche 1 und 2, **dadurch gekennzeichnet, dass** die Netztransformatoren (19, 25) der Moduleinheiten (17; 171,..,178) als luftisolierte oder mit Kunstharz vergossene Transformatoren ausgeführt sind.

4. Hochspannungs-Gleichstromversorgung nach einem der Ansprüche 1 bis 3, **dadurch gekennzeichnet, dass** die Moduleinheiten (17; 171,..,178) in mehreren untereinander und vom Boden (50) isolierten Ebenen übereinander angeordnet sind.

5. Hochspannungs-Gleichstromversorgung nach Anspruch 4, **dadurch gekennzeichnet, dass** die Moduleinheiten (17; 171,..,178) einzeln übereinander angeordnet und durch Isolatorstützen (51) voneinander isoliert sind.

6. Hochspannungs-Gleichstromversorgung nach einem der Ansprüche 4 und 5, **dadurch gekennzeichnet, dass** die Moduleinheiten (17; 171,..,178) in zwei Ebenen übereinander angeordnet sind, wobei in der ersten unteren Ebene eine erste Anzahl von Moduleinheiten (171,..,174) nebeneinander und jeweils durch Isolatorstützen (51) vom Boden (50) isoliert aufgestellt sind, und in der zweiten, oberen Ebene auf jeder der Moduleinheiten (171,..,174) der ersten Ebene jeweils eine weitere Moduleinheit (175,..,178) angeordnet und durch Isolatorstützen (51) von der darunterstehenden Moduleinheit isoliert ist.

7. Hochspannungs-Gleichstromversorgung nach einem der Ansprüche 1 bis 6, **dadurch gekennzeichnet, dass** die Moduleinheiten (17; 171,..,178) jeweils in einem Gehäuse (49) untergebracht sind, dass innerhalb jeder Moduleinheit (17; 171,..,178) die Module (3001,..,3060) in zwei im wesentlichen gleich grosse Gruppen (3001,..,3030 bzw. 3031,..,3060) aufgeteilt sind, dass in der ausgangsseitigen Serieschaltung der Module (3001,..,3060) zwischen den beiden Gruppen ein Mittelabgriff (23) vorgesehen ist, und dass das Gehäuse (49) über eine zum Mittelabgriff (23) führende Verbindungsleitung (33) auf das Potential des Mittelabgriffs (23) gelegt ist.

8. Hochspannungs-Gleichstromversorgung nach Anspruch 7, **dadurch gekennzeichnet, dass** innerhalb jeder Moduleinheit (17; 171,..,178) jeder der Modulgruppen ein Netztransformator (19 bzw. 25) mit einem Transformatorkern sowie einer Primärwicklung (20 bzw. 26) und einer der Anzahl der zu versorgenden Module entsprechenden Zahl von Sekundärwicklungen (21 bzw. 27) zugeordnet ist, und dass die Primärwicklungen (20, 26) und die Kerne der Netztransformatoren (19, 25) jeweils mit dem Mittelabgriff (23) verbunden sind.

9. Hochspannungs-Gleichstromversorgung nach Anspruch 8, **dadurch gekennzeichnet, dass** die Netztransformatoren (19, 25) durch eine 3-phasige Anschlussleitung (24 bzw. 29) an das Netz angeschlossen sind, und dass eine Phase der Anschlussleitungen (24, 29) bzw. bei einer Sternschaltung der Sternpunkt mit dem Mittelabgriff (23) verbunden ist.

10. Hochspannungs-Gleichstromversorgung nach einem der Ansprüche 1 bis 9, **dadurch gekennzeichnet, dass** die maximale Ausgangsspannung der Versorgung mehr als 100 kV, insbesondere mehr als 300 kV, beträgt, dass die maximale Ausgangsspannung der Moduleinheiten mehrere 10 kV, insbesondere zwischen 40 und 50 kV, beträgt, und dass die Ausgangsspannung der einzelnen Module mehrere 100 V, insbesondere zwischen 700 und 800 V, beträgt.

11. Hochspannungs-Gleichstromversorgung nach einem der Ansprüche 1 bis 10, **dadurch gekennzeichnet, dass** in den einzelnen Modulen (30; 3001,..,3060) jeweils ein Gleichrichter (40) zum Gleichrichten der Wechselspannung und hinter dem Gleichrichter (40) wenigstens ein Leistungshalbleiterschalter (45) zum Ein- und Ausschalten des Moduls innerhalb der Serieschaltung der Module (3001,..,3060) angeordnet ist.

12. Hochspannungs-Gleichstromversorgung nach Anspruch 11, **dadurch gekennzeichnet, dass** als Leistungshalbleiterschalter (45) in den Modulen (30; 3001,..,3060) ein IGBT eingesetzt ist.

13. Anwendung der Hochspannungs-Gleichstromversorgung nach einem der Ansprüche 1 bis 11 als steuerbare Versorgung für einen Negativ-Ionen-Neutralteilchen-Injektor.

## Claims

1. A controllable high-voltage d.c. power supply (10) comprising a series of modules (30; 3001, ..., 3060), wherein said modules (30; 3001, ..., 3060) are realized in the form of switchable direct voltage sources, the outputs of which are connected in series in order to add the output voltages and the inputs of which are respectively connected to alternating voltage mains (11) via a mains transformer (19, 25) in order to realize the alternating voltage supply, **characterized by** the fact that groups of modules (30; 3001, ..., 3060) are combined into module units (17; 171, ..., 178) that are insulated from one another, by the fact that the modules of a module unit are respectively supplied with an alternating voltage by at least one independent mains transformer (19, 25) that is entirely arranged in the module unit, and by the fact that at least one insulation transformer (13) is arranged between the at least one mains transformer (19, 25) of each module unit (17; 171, ..., 178) and the alternating voltage mains (11).

2. The high-voltage d.c. power supply according to Claim 1, **characterized by** the fact that a common insulation transformer (13) is used for all module units (17; 171, ..., 178), wherein said insulation transformer is connected to the alternating voltage mains (11) with a primary winding (14), and wherein the insulation transformer contains a series of secondary windings (15) for connecting the mains transformers (19, 25) of the module units (17; 171, ..., 178).

3. The high-voltage d.c. power supply according to Claim 1 or 2, **characterized by** the fact that the mains transformers (19, 25) of the module units (17; 171, ..., 178) are realized in the form of air-insulated transformers or transformers cast in artificial resin.

4. The high-voltage d.c. power supply according to one of Claims 1 - 3, **characterized by** the fact that the module units (17; 171, ..., 178) are arranged in several planes that are insulated from one another and from the ground (50).

5. The high-voltage d.c. power supply according to Claim 4, **characterized by** the fact that the module units (17; 171, ..., 178) are individually arranged on top of one another and insulated from one another by insulator brackets (51).

6. The high-voltage d.c. power supply according to Claim 4 or 5, **characterized by** the fact that the module units (17; 171, ..., 178) are arranged on top of one another in two planes, wherein a series of module units (171, ..., 174) are assembled adjacent to one another in the first, lower plane such that they are respectively insulated from the ground (50) by insulator brackets (51), and wherein one additional module unit (175, ..., 178) is respectively arranged on top of each module unit (171, ..., 174) of the first plane in the second, upper plane, namely such that the additional module units are insulated from the module units situated underneath by insulator brackets (51).

7. The high-voltage d.c. power supply according to one of Claims 1 - 6, **characterized by** the fact that the module units (17; 171, ..., 178) are respectively accommodated in a housing (49), by the fact that the modules (3001, ..., 3060) of each module unit (17; 171, ..., 178) are divided into groups (3001, ..., 3030 and 3031, ..., 3060) of essentially identical size, by the fact that a center tap (23) is provided between the two groups in the series connection of the outputs of the modules (3001, ..., 3060), and by the fact that the housing (49) is connected to the potential of the center tap (23) by means of a connecting line (33) that leads to the center tap (23).

8. The high-voltage d.c. power supply according to Claim 7, **characterized by** the fact that one respective mains transformer (19 and 25) with a transformer core, a primary winding (20 and 26) and a number of secondary windings (21 and 27) that corresponds to the number of modules to be supplied is assigned to each of the module groups within each module unit (17; 171, ..., 178), and by the fact that the primary windings (20, 26) and the cores of the mains transformers (19, 25) are respectively connected to the center tap (23).

9. The high-voltage d.c. power supply according to Claim 8, **characterized by** the fact that the mains transformers (19, 25) are respectively connected to the mains via a 3-phase connecting line (24 and 29), and by the fact that one phase of the connecting lines (24, 29) or, in case of a star connection, the start point is connected to the center tap (23).

10. The high-voltage d.c. power supply according to one of Claims 1 - 9, **characterized by** the fact that the maximum output voltage of the power supply lies in excess of 100 kV, in particular, in excess of 300 kV, by the fact that the maximum output voltage of the module units lies at several 10 kV, in particular, between 40 and 50 kV, and by the fact that the output voltage of the individual modules lies at several 100 V, in particular, between 700 and 800 V.

11. The high-voltage d.c. power supply according to one of Claims 1 - 10, **characterized by** the fact that one respective rectifier (40) for rectifying the alternating voltage is arranged in the individual modules (30; 3001, ..., 3060), wherein at least one power semiconductor switch (45) for switching the module on and off within the series connection of the modules (3001, ..., 3060) is arranged downstream of the rectifier (40).

12. The high-voltage d.c. power supply according to Claim 11, **characterized by** the fact that an IGBT is used as the power semiconductor switch (45) in the modules (30; 3001, ..., 3060).

13. A utilization of the high-voltage d.c. power supply according to one of Claims 1 - 11 in the form of a controllable power supply for a negative-ion neutral particle injector.

## Revendications

1. Système contrôlable d'alimentation en courant continu à haute tension (10), comprenant une pluralité de modules (30 ; 3001, ..., 3060), lesquels modules (30 ; 3001, ..., 3060) étant conçus comme des sources commutables de tension continue, qui, du côté de la sortie, sont branchées en série aux fins de totalisation des tensions de sortie et, du côté de l'entrée, sont raccordées respectivement par l'intermédiaire d'un transformateur de réseau (19, 25), pour alimentation en tension alternative, à un réseau à tension alternative (11), **caractérisé en ce que** les modules (30 ; 3001, ..., 3060) sont composés d'unités de modules (17 ; 171, ..., 178) structurées en groupes, isolées les unes des autres, que les modules d'une unité de modules sont alimentés respectivement en tension alternative par au moins un transformateur de réseau (19, 25) autonome complètement intégré dans l'unité de modules et qu'entre ce transformateur de réseau présent en au moins un exemplaire (19, 25) de chaque unité de modules (17 ; 171, ..., 178) et le réseau à tension alternative (11), au moins un transformateur d'isolation (13) est disposé.

2. Système d'alimentation en courant continu à haute tension selon la revendication 1, **caractérisé en ce que**, pour toutes les unités de modules (17 ; 171, ..., 178), un transformateur d'isolation (13) commun est utilisé, qui est raccordé par un enroulement primaire (14) au réseau à tension alternative (11), et présente une pluralité d'enroulements secondaires (15) pour le raccordement des transformateurs de réseau (19, 25) des unités de modules (17 ; 171, ..., 178).

3. Système d'alimentation en courant continu à haute tension selon une des revendications 1 et 2, **caractérisé en ce que** les transformateurs de réseau (19, 25) des unités de modules (17, ; 171, ..., 178) sont réalisés sous forme de transformateurs de réseau isolés de l'air ou scellés à la résine synthétique.

4. Système d'alimentation en courant continu à haute tension selon une des revendications 1 à 3, **caractérisé en ce que** les unités de modules (17 ; 171, ..., 178) sont disposées superposées dans plusieurs plans isolés les uns des autres et du sol (50).

5. Système d'alimentation en courant continu à haute tension selon la revendication 4, **caractérisé en ce que** les unités de modules (17 ; 171, ..., 178) sont disposées superposées individuellement et sont isolées les unes des autres par des supports isolateurs (51).

6. Système d'alimentation en courant continu à haute tension selon une des revendication 4 et 5, **caractérisé en ce que** les unités de modules (17 ; 171, ..., 178) sont disposées superposées dans deux plans, une première série d'unités de modules (171, ..., 174) étant placées les unes à côté des autres et respectivement isolées du sol (50) par des supports isolateurs (51) dans le premier plan inférieur, et une autre unité de modules (175, ..., 178) étant, dans le second plan supérieur, respectivement disposée sur chacune des unités de modules (171, ..., 174) du premier plan et isolée par des supports isolateurs (51) des unités de modules situées en dessous.

7. Système d'alimentation en courant continu à haute tension selon une des revendication 1 à 6, **caractérisé en ce que** les unités de modules (17 ; 171, ..., 178) sont respectivement installées dans un boîtier (49), qu'au sein de chaque unité de modules (17 ; 171, ..., 178), les modules (3001, ..., 3060) sont subdivisés en groupes de tailles globalement égales (3001, ..., 3030 ou 3031, ..., 3060), que, dans le couplage en série des modules (3001, ..., 3060), du côté de la sortie, un capteur central (23) est prévu entre les deux groupes, et que le boîtier (49), par l'intermédiaire d'une ligne de liaison (33) conduisant au capteur central (23), est réglé sur le potentiel du capteur central (23).

8. Système d'alimentation en courant continu à haute tension selon la revendication 7, **caractérisé en ce qu'**au sein de chaque unité de modules (17 ; 171, ..., 178), à chacun des groupes de modules un transformateur de réseau (19 ou 25) avec un noyau de transformateur, ainsi qu'à un enroulement primaire (20 ou 26) et un nombre d'enroulements secondaires (21 ou 27) correspondant au nombre de modules à alimenter est associé et que les enroulements primaires (20, 26) et les noyaux des transformateurs de réseau (19, 25) sont reliés respectivement au capteur central (23).

9. Système d'alimentation en courant continu à haute tension selon la revendication 8, **caractérisé en ce que** les transformateurs de réseau (19, 25) sont raccordés au réseau par une ligne de raccordement triphasée (24 ou 29), et qu'une phase des lignes de raccordement (24, 29) ou, en cas de branchement en étoile, le point en étoile est relié au capteur central (23).

10. Système d'alimentation en courant continu à haute tension selon une des revendications 1 à 9, **caractérisé en ce que** la tension maximale de sortie du système d'alimentation est de plus de 100 kV, en particulier de plus de 300 kV, que la tension de sortie maximale des unités de modules est de plus de 10 kV, en particulier entre 40 et 50 kV, et que la tension de sortie des modules individuels est de plus de 100 V, en particulier entre 700 et 800 V.

11. Système d'alimentation en courant continu à haute tension selon une des revendications 1 à 10, **caractérisé en ce que**, dans les modules individuels (30 ; 3001, ..., 3060) un redresseur (40) pour le redressement de la tension alternative et, derrière le redresseur (40) au moins un interrupteur à semi-conducteur de puissance (45) pour la connexion et la déconnexion du module au sein du couplage en série des modules (3001, ..., 3060) sont respectivement prévus.

12. Système d'alimentation en courant continu à haute tension selon la revendication 11, **caractérisé en ce que** l'on utilise un transistor bipolaire à grille isolée (IGBT) comme interrupteur à semi-conducteur de puissance (45) dans les modules (30 ; 3001, ..., 3060).

13. Application du système d'alimentation en courant continu à haute tension selon une des revendications 1 à 11 en tant que système contrôlable d'alimentation pour un injecteur de neutres à ions négatifs.
